# EUROPEAN PATENT APPLICATION

(11) **EP 4 723 803 A1**
(43) Date of publication of application: **08.04.2026**
(21) Application number: 23939672.4
(22) Date of filing: 31.05.2023
(51) Int. Cl.: H04W 92/16, H04W 88/08, H04W 92/12

(54) **COMMUNICATION DEVICE, RADIO DEVICE, CONTROL DEVICE, RADIO COMMUNICATION SYSTEM, AND CONTROL METHOD**

(71) Applicant: 1FINITY Inc., Kawasaki-shi, Kanagawa 211-8588 (JP)
(72) Inventor: ITO Yuzo, Kawasaki-shi, Kanagawa 211-8588 (JP); OGAWA Koji, Kawasaki-shi, Kanagawa 211-8588 (JP); OTSUKA Yasunori, Kawasaki-shi, Kanagawa 211-8588 (JP)
(74) Representative: Haseltine Lake Kempner LLP
(86) International application number: PCT/JP2023/020366
(87) International publication number: WO 2024/247197

(57) **Abstract**

A communication device in a wireless communication system constructed based on an open interface specification, the communication device includes a communication device receiver that receives a service query including service information related to a type of a service from the control device and a communication device transmitter that transmits a wireless device service query including the type of the service to all the wireless devices under the control when the communication device supports the service, wherein the communication device receiver receives presence or absence of support of the service from the wireless device, and the communication device transmitter transmits, to the control device, a service query notification including identification information of a supporting wireless device that supports the service among the wireless devices under the control of the communication device.

## Description

### TECHNICAL FIELD

The present invention relates to a communication device, a wireless device, a control device, a wireless communication system, and a control method.

### BACKGROUND ART

In recent years, an open radio access network (O-RAN), which is a 5G radio access network constructed based on an open interface specification and in which functions are separated, has attracted attention. The interface (fronthaul interface) between the DU and the RU has been designed for each vendor of the communication devices, but the O-RAN (Open RAN) Alliance defines the interface of the radio access network and the specification of communication devices. By providing a communication device conforming to the O-RAN specification, a device vendor enables mutual connection with communication devices of other providers. The Q-RAN can use subcomponents provided by various service providers and vendors.

In the O-RAN, for example, functions of a base station device are separated into a distributed unit (DU) and a radio unit (RU). The RU is a unit that transmits and receives radio signals, and the DU is a unit that controls the RU. Furthermore, the O-RAN includes, for example, an operation system (OPS) that monitors/controls the DU.

In the O-RAN, the O-RAN specification version (hereinafter, it may be referred to as an ORAN version number) supported by the devices may be different depending on the development time of each connected device. Therefore, in the O-RAN specification, backward compatibility (backward compatibility) is guaranteed in order to realize an interface with a lower ORAN version number device.

In the radio access network, for example, a NETCONF (NETwork CONFiguration) protocol is used to acquire and update the configuration of a network device. NETCONF is one of standard transport protocols for communicating with network devices. In NETCONF, a Yet Another Next Generation (YANG) modeling language is used as a description language for setting items and the like. That is, in NETCONF, a network device is configured on the basis of the data described in YANG. YANG is one of modeling languages developed for the purpose of describing structures such as setting items, states, and procedure calls of a network device in a form easily interpreted by a person. It should be noted that data obtained by abstracting the setting value and the structure of a network device by using YANG may be referred to as a "YANG data model" or a "YANG module". In the O-RAN specification, backward compatibility (backward compatibility) is guaranteed in YANG module in order to realize an interface with a lower ORAN version number device.

Techniques related to O-RAN are described in the following citation list.

### CITATION LIST

### PATENT LITERATURE

Patent Literature 1: WO 2021/181910 A
Patent Literature 2: JP 2022-554262 A

### SUMMARY OF INVENTION

### PROBLEMS TO BE SOLVED BY THE INVENTION

As described above, respective devices constituting the O-RAN may have different corresponding ORAN version numbers depending on the development time or the like. The operator combines these devices to provide a service to the user, but needs to investigate the ORAN version numbers of the devices to be combined and the services that can be supported by the devices in order to start the target service. This is because, even in a device conforming to the O-RAN specification, for example, there is a case where a service that is not indispensable is not supported due to restrictions such as a hardware configuration. Therefore, for example, the operator investigates the ORAN version numbers and the services supported by these devices for all the devices used in the operation, which may need enormous man-hours.

Therefore, one disclosure provides a control device and a control method that suppress man-hours of an operator.

### MEANS FOR SOLVING THE PROBLEMS

A communication device in a wireless communication system constructed based on an open interface specification, the wireless communication system including a control device, a wireless device that accommodates a wireless terminal, and the communication device that processes a signal of the wireless device, each of the communication devices including one or more of the wireless devices under control of the communication device, the communication device includes a communication device receiver that receives a service query including service information related to a type of a service from the control device and a communication device transmitter that transmits a wireless device service query including the type of the service to all the wireless devices under the control when the communication device supports the service, wherein the communication device receiver receives presence or absence of support of the service from the wireless device, and the communication device transmitter transmits, to the control device, a service query notification including identification information of a supporting wireless device that supports the service among the wireless devices under the control of the communication device.

### ADVANTAGEOUS EFFECTS OF THE INVENTION

According to one disclosure, man-hours of an operator can be suppressed.

### BRIEF DESCRIPTION OF DRAWINGS

FIG. 1 is a diagram illustrating an example of a configuration of a wireless communication system 10.
FIG. 2 is a diagram illustrating an example of a configuration of the OPS 300.
FIG. 3 is a diagram illustrating an example of a configuration of the DU 200.
FIG. 4 is a diagram illustrating an example of a configuration of the RU 100.
FIG. 5 is a diagram illustrating an example of a sequence of initial processing in service query processing.
FIG. 6 is a diagram illustrating an example of the DU function table.
FIG. 7 is a diagram illustrating an example of the RU function table.
FIG. 8 is a diagram illustrating an example of a sequence of a service query success in the service query processing.
FIG. 9 is a diagram illustrating an example of a sequence of a service query failure caused by the DU 200 not supporting the service, in the service query processing.
FIG. 10 is a diagram illustrating an example of a sequence of a service query failure caused by the RU 100 not supporting the service, in the service query processing.
FIG. 11 is a diagram illustrating an example of a message format between the OPS 300 and the DU 200.
FIG. 12 is a diagram illustrating an example of a message format between the DU 200 and the RU 100.
FIG. 13 is a diagram illustrating an example of a sequence of a service query success in the service query processing.
FIG. 14 is a diagram illustrating an example of a message format between the OPS 300 and the DU 200.
FIG. 15 is a diagram illustrating an example of a message format between the DU 200 and the RU 100.

### DESCRIPTION OF EMBODIMENTS

### [First Embodiment]

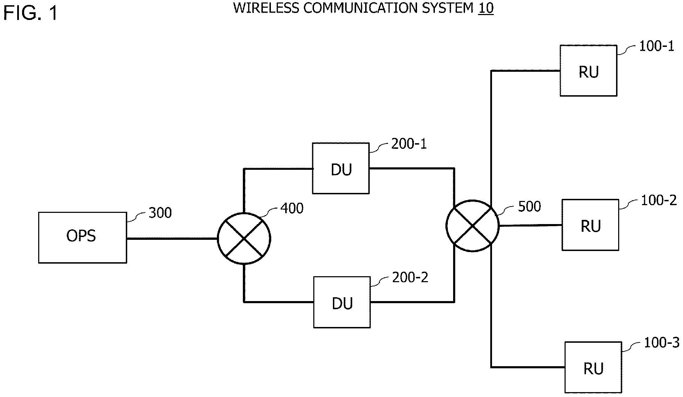

A first embodiment will be described. FIG. 1 is a diagram illustrating an example of a configuration of a wireless communication system 10. The wireless communication system 10 is a system including an OPS 300, DUs 200-1 and 200-2, and RUs 100-1 to 100-3, and is, for example, an O-RAN. Note that a network 400 and a network 500 in FIG. 1 may be the same network or different networks.

The OPS 300 is a control device operated by an operator, and is, for example, a server machine. The OPS 300 is connected to the DUs 200-1 and 200-2 via the network 400, for example, and controls the DUs 200-1 and 200-2. In addition, the OPS 300 monitors the DUs 200-1 and 200-2.

The DUs 200-1 and 200-2 (hereinafter, may be referred to as a DU 200) are control devices that control the RUs 100-1 to 100-3. The DU 200 connects to the RUs 100-1 to 100-3 via the network 500 and controls the RUs 100-1 to 100-3. The DU 200 processes, for example, a task of a higher part (High-PHY) of the physical layer, a media access control (MAC), and a radio link control (RLC) task. The DU 200 may have a function of a central unit (CU). Furthermore, in the wireless communication system 10, a CU may be connected to the higher level of the DU 200 (between the OPS 300 and the DU 200).

The RUs 100-1 to 100-3 (hereinafter, may be referred to as RU 100) are wireless stations that perform wireless communication in accordance with an instruction from the DU 200. The RU 100 can provide processing of, for example, a radio frequency (RF) and a lower portion (Low-PHY) of the physical layer, and can accommodate a wireless terminal. Therefore, the RU 100 is an example of a wireless device that accommodates a wireless terminal.

In the wireless communication system 10, the OPS 300 performs service query processing when starting a certain service. The service query processing is processing to search for a combination of the DU 200 and the RU 100 capable of executing the service. By performing the service query processing, the OPS 300 can recognize a combination of the DU 200 and the RU 100 that supports the service to be executed under the control of its own device.

In the wireless communication system 10, the RU 100 is controlled by one DU 200. In FIG. 1, for example, the RUs 100-1 and 100-2 are controlled by the DU 200-1, and the RU 100-3 is controlled by the DU 200-2. The control/controlled relationship (master-slave relationship) between the RU 100 and the DU 200 may be dynamically switched. The master-slave relationship may be switched by, for example, a change due to a system rearrangement due to a failure of the devices or a system rearrangement due to a change in the radio state (concentration of terminals, environmental change, or the like). In the wireless communication system 10, the RU 100 may be controlled by a plurality of DUs 200.

### <Configuration Example of OPS 300>

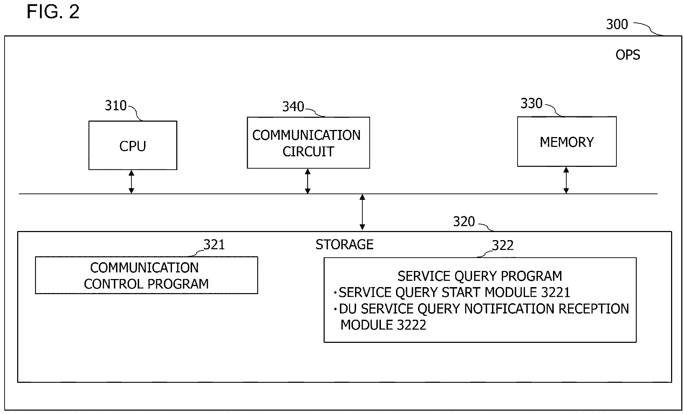

FIG. 2 is a diagram illustrating an example of a configuration of the OPS 300. The OPS 300 includes a central processing unit (CPU) 310, a storage 320, a memory 330, and a communication circuit 340.

The storage 320 is an auxiliary storage device such as a flash memory, a hard disk drive (HDD), or a solid state drive (SSD) that stores programs and data. The storage 320 stores a communication control program 321 and a service query program 322.

The memory 330 is an area where a program stored in the storage 320 is loaded. The memory 330 may be used as an area where a program stores data.

The communication circuit 340 is a device that communicates with the DU 200 and the RU 100. The communication circuit 340 may be, for example, a wired communication circuit such as a network interface (NI) or a communication circuit compatible with wireless connection.

The CPU 310 is a processor that loads a program stored in the storage 320 on the memory 330, executes the loaded program, constructs each unit, and implements each processing.

The CPU 310 executes the communication control program 321 to perform communication control processing. The communication control processing is processing to control the DU 200 and control the wireless communication executed via the RU 100.

The CPU 310 executes the service query program 322 to construct a control unit and a communication unit and performs service query processing. The service query processing is processing to request the DU 200 whether or not a certain service is supported or not and the names (including identifiers and the like) of the DU 200 and the RU 100 corresponding to the service.

The CPU 310 executes a service query start module 3221 included in the service query program 322 to construct a control unit and a communication unit and perform service query start processing. The service query start processing is processing to start the service query processing. In the service query start processing, the OPS 300 transmits a DU service query request including a certain service (for example, a service desired by the operator) to the DU 200 under its control and waits for a DU service query response from the DU 200.

The CPU 310 executes a DU service query notification reception module 3222 included in the service query program 322 to construct a control unit and a communication unit, and performs DU service query notification reception processing. The DU service query notification reception processing is processing to receive a DU service query notification from the DU 200. In the DU service query notification reception processing, the OPS 300 waits for reception of a DU service query notification from the DU 200 under its control.

### <Configuration Example of DU 200>

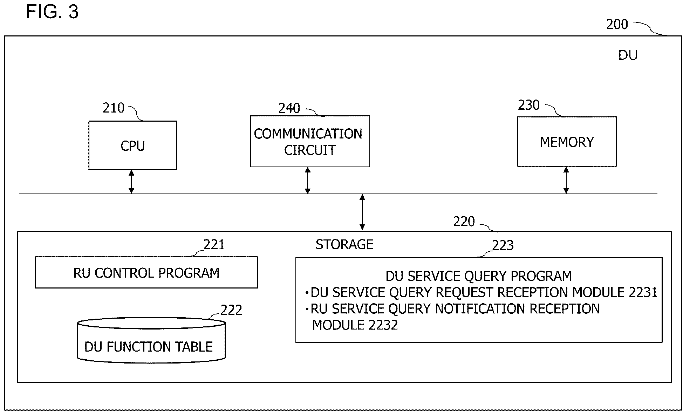

FIG. 3 is a diagram illustrating an example of a configuration of the DU 200. The DU 200 includes a CPU 210, a storage 220, a memory 230, and a communication circuit 240.

The storage 220 is an auxiliary storage device such as a flash memory, an HDD, or an SSD that stores programs and data. The storage 220 stores an RU control program 221, a DU service query program 223, and a DU function table 222. The DU function table 222 is a table indicating a correspondence relationship between a function (service) supported by the DU 200 and a corresponding ORAN version. The DU function table 222 will be described later in detail.

The memory 230 is an area into which the programs stored in the storage 220 are loaded. The memory 230 may also be used as an area where a program stores data.

The communication circuit 240 is a device that communicates with the OPS 300 and the RU 100. The communication circuit 240 may be, for example, a wired communication circuit such as an NI or a communication circuit compatible with wireless connection.

The CPU 210 is a processor that loads a program stored in the storage 220 into the memory 230, executes the loaded program, constructs each unit, and implements each processing.

The CPU 210 executes the RU control program 221 to perform RU control processing. The RU control processing is processing to control wireless communication performed by the RU 100.

The CPU 210 executes the DU service query program 223 to construct a DU control unit and a DU communication unit, and performs DU service query processing. The DU service query processing is processing to inquire the RU 100 about whether or not a certain service is supported, the ORAN version number supported by the RU 100, and the like.

The CPU 210 executes the DU service query request reception module 2231 included in the DU service query program 223 to construct the DU control unit and the DU communication unit, and performs DU service query request reception processing. The DU service query request reception processing is processing to receive a DU service query request from the OPS 300. In the DU service query request reception processing, the DU 200 transmits an RU service query request to the RU 100 under its control and waits for an RU service query response from the RU 100.

The CPU 210 executes the RU service query notification reception module 2232 included in the DU service query program 223 to construct the DU control unit and the DU communication unit, and performs RU service query notification reception processing. The RU service query notification reception processing is processing to receive an RU service query notification from the RU 100 under its control. The DU 200 transmits a DU service query notification to the OPS 300 in the RU service query notification reception processing.

### <Configuration Example of RU 100>

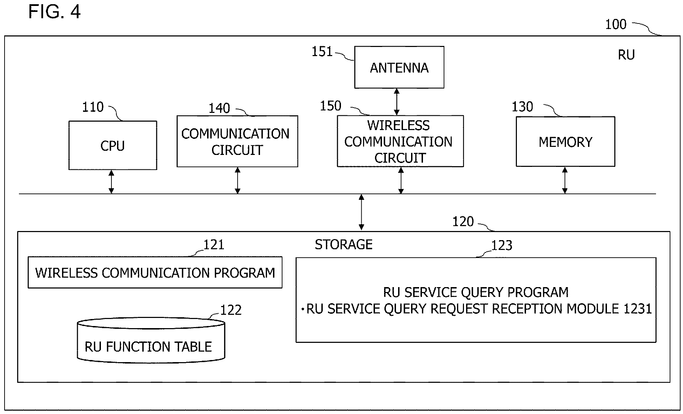

FIG. 4 is a diagram illustrating an example of a configuration of the RU 100. The RU 100 includes a CPU 110, a storage 120, a memory 130, a communication circuit 140, a wireless communication circuit 150, and an antenna 151.

The storage 120 is an auxiliary storage device such as a flash memory, an HDD, or an SSD that stores programs and data. The storage 120 stores a wireless communication program 121, an RU service query program 123, and an RU function table 122. The RU function table 122 is a table indicating a correspondence relationship between a function (service) supported by the RU 100 and a corresponding ORAN version.

The memory 130 is an area into which the programs stored in the storage 120 are loaded. The memory 130 may also be used as an area where a program stores data.

The communication circuit 140 is a device that communicates with the OPS 300 and the DU 200. The communication circuit 140 may be, for example, a wired communication circuit such as an NI or a communication circuit compatible with wireless connection.

The wireless communication circuit 150 is a device that performs wireless communication with a wireless communication terminal. The wireless communication circuit 150 includes the antenna 151. The antenna 151 includes, for example, a directional antenna capable of controlling the direction of transmission and reception of radio waves.

The CPU 110 is a processor that loads a program stored in the storage 120 into the memory 130, executes the loaded program, constructs each unit, and implements each process.

The CPU 110 executes the wireless communication program 121 to perform wireless communication processing. The wireless communication processing is processing to wirelessly connect to a wireless communication terminal, transmit and receive signals, and perform wireless communication.

The CPU 110 executes the RU service query program 123 to construct an RU control unit and an RU communication unit and perform RU service query processing. The RU service query processing is processing to receive an RU service query request from the DU 200 and transmit whether or not the own device supports a certain service, the corresponding ORAN version number, and the like, to the DU 200.

The CPU 110 executes the RU service query request reception module 1231 included in the RU service query program 123 to construct the RU control unit and the RU communication unit, and performs RU service query request reception processing. The RU service query processing is processing to receive an RU service query request from the DU 100.

### <Service query processing>

In the wireless communication system 10, when starting a certain service, the operator operates the OPS 300 to perform service query processing. The service query processing will be described below. Note that, in the following sequence, an example in which there is one DU 200 and one RU 100 will be described, but there may be two or more DUs and two or more RUs.

### <1. Initial processing>

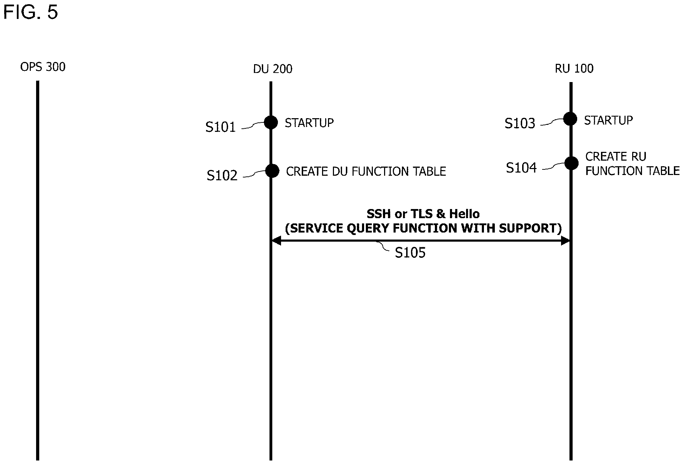

FIG. 5 is a diagram illustrating an example of a sequence of initial processing in service query processing. At the time of startup (S101), the DU 200 creates the DU function table 222 (S102). Creation of the DU function table includes, for example, processing to develop a table stored in the program on the memory of the DU 200.

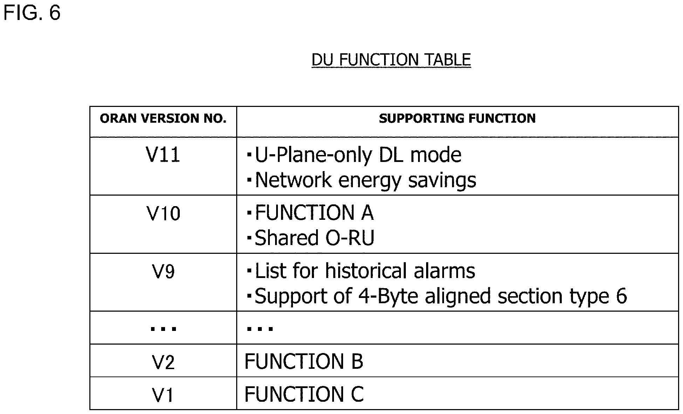

FIG. 6 is a diagram illustrating an example of the DU function table. The DU function table is a table indicating a relationship between the ORAN version number and the supporting function. The reason why the DU function table includes the supporting function is that, there is a case where the DU 200 supporting a certain ORAN version number does not support a service that is not indispensable for example, due to a restriction such as a hardware configuration even though that is a service (function) defined by the certain ORAN version number, and not all services can be supported. For example, as illustrated in FIG. 6, the DU 200 supports up to the ORAN version number V11, and can support a function A that is a function of the ORAN version number V10. However, there is a case where another DU 200 does not support the function A that is a function of the ORAN version number V10, although it supports up to the ORAN version number V11.

As illustrated in FIG. 6, the DU 200 supports the ORAN version number V11. This indicates that the DU 200 can communicate with other devices (the RU 100 and the OPS 300) using a structure (YANG module) or the like defined by the ORAN version number V11.

Returning to the sequence of FIG. 5, the RU 100 creates the RU function table (S104) at the time of startup (S103). Creation of the RU function table includes, for example, processing to develop a table stored in the program on the memory of the RU 100.

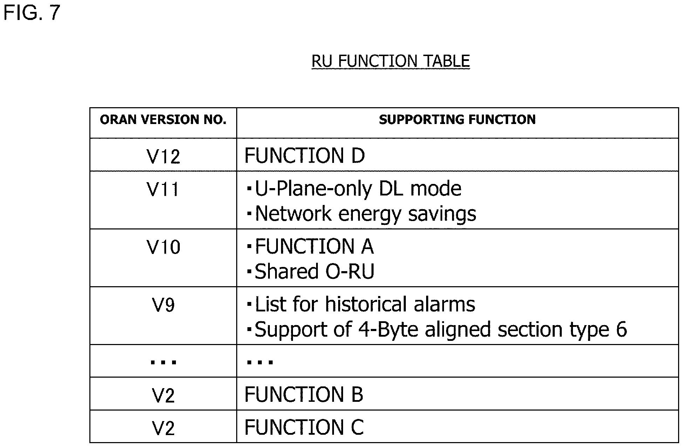

FIG. 7 is a diagram illustrating an example of the RU function table. The RU function table is a table indicating a relationship between the ORAN version number and the supporting function. The reason why the RU function table includes the supporting function is that, there is a case where the RU 100 supporting a certain ORAN version number does not support a service that is not indispensable for example, due to a restriction such as a hardware configuration even though that is a service (function) defined by the certain ORAN version number, and not all services can be supported. For example, as illustrated in FIG. 7, the RU 100 supports up to the ORAN version number V12, and can support the function A that is a function of the ORAN version number V10. However, there is a case where another RU 100 does not support the function A that is a function of the ORAN version number V10, although it supports up to the ORAN version number V12.

As illustrated in FIG. 7, the RU 100 supports the ORAN version number V12. This indicates that the RU 100 can communicate with other devices (the DU 200 and the OPS 300) using a structure (YANG module) or the like defined by the ORAN version number V12.

Returning to the sequence of FIG. 5, the DU 200 and the RU 100 transmit and receive information to and from each other (SSH or TLS & Hello) (S105). At this time, the RU 100 notifies the DU 200 whether or not to support the service query function as capability information to be transmitted and received. That is, the DU 200 acquires, from the RU 100, whether or not the service query function is supported, as capability information to be transmitted and received. When the RU 100 does not support the service query function, the DU 200 does not transmit an RU service query request described below.

In addition, when receiving a service query request described below, the DU 200 that does not support the service query function discards the message or handles the message as an error message.

### <2. Service query success>

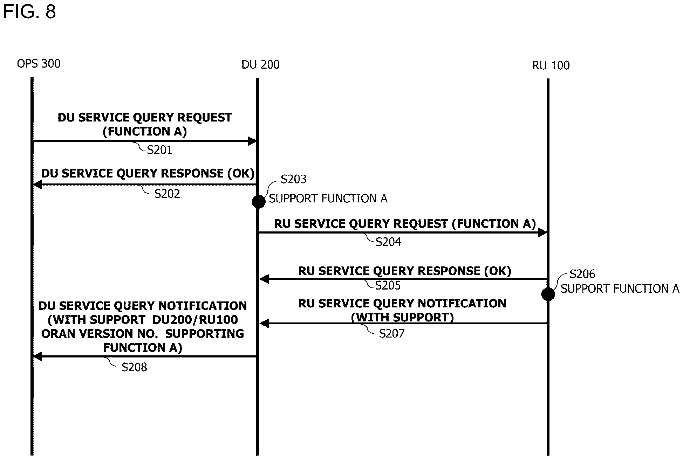

FIG. 8 is a diagram illustrating an example of a sequence of a service query success in the service query processing. A service query success indicates that there is a combination of the DU 200 and the RU 100 supporting the service. In the following sequence, it is assumed that the service to be queried is the function A.

The OPS 300 transmits a DU service query request to the DU 200 (S201). The DU service query request includes the function A that is a service to be queried.

When the OPS 300 has a plurality of DUs 200 under its control, for example, the OPS 300 transmits a DU service query request to all the DUs 200 under its control.

When accepting the DU service query request, the DU 200 transmits a DU service query response including acceptance OK to the OPS 300 (S202).

Note that the case in which the DU 200 does not accept the DU service query request includes, for example, a syntax error of the DU service query request and a case in which the DU 200 is in a state of being unable to accept the DU service query request (for example, a state where communication with the RU 100 is disconnected). In such a case, the DU 200 transmits a DU service query response including acceptance NG to the OPS 300.

The DU 200 checks whether or not the own device supports the function A (S203). The DU 200 refers to the DU function table 222 and checks whether or not the function A can be supported. When the DU function table has the content illustrated in FIG. 6, the DU 200 recognizes that the function A is supported as a function of the ORAN version number V10.

When the function A is supported, the DU 200 transmits an RU service query request to the RU 200 (S204). The RU service query request includes the function A that is a service to be queried.

When the DU 200 has a plurality of RUs 100 under its control, for example, the DU 200 transmits an RU service query request to all the RUs 100 under its control.

When accepting the RU service query request, the RU 100 transmits an RU service query response including acceptance OK to the DU 200 (S205).

Note that the case where the RU 100 does not accept the RU service query request includes, for example, a syntax error of the RU service query request and a case where the RU 100 is in a state of being unable to accept the RU service query request (for example, during maintenance, a state where wireless communication cannot be performed, or the like). In such a case, the RU 100 transmits an RU service query response including acceptance NG to the DU 200.

The RU 100 checks whether or not the own device supports the function A (S206). The RU 100 refers to the RU function table 122 and checks whether or not the function A can be supported. When the RU function table has the content illustrated in FIG. 7, the RU 100 recognizes that the function A is supported as a function of the ORAN version number V10.

When the function A is supported, the RU 100 transmits an RU service query notification to the DU 200 (S207). The RU service query notification includes that the query function is supported (with support).

Upon receiving the RU service query notification from the RU 100, the DU 200 transmits a DU service query notification to the OPS 300 (S208). The DU service query notification includes that the query function is supported (with support). In addition, the DU service query notification includes the names (identifiers) of the RU 100 and the DU 200 that support the function A. In addition, the DU service query notification includes the ORAN version number V10 that is the ORAN version number supporting the function A.

Note that, in the case where the DU 200 has a plurality of RUs 100 under its control, the DU 200 may wait for DU service query notifications from all the RUs 100 under its control. In this case, the names (identifiers) of the RUs 100 included in the DU service query notification are the names (identifiers) of all the RUs 100 supporting the function A. In addition, when waiting for DU service query notifications from all the RUs 100 under its control, the DU 200 may start a timer for waiting for reception of DU service query notifications and determine that the RU 100 does not support the function when DU 200 cannot receive DU service query notifications for a predetermined time.

Upon receiving the DU service query notification, the OPS 300 stores the names (identifiers) of the DU 200 and the RU 100 supporting the function A, the ORAN version number supporting the function A, and the like.

As described above, the OPS 300 can recognize the combination of the DU 200 and the RU 100 supporting the desired service by executing the service query processing.

### <3. Service query failure (DU 200 does not support service)>

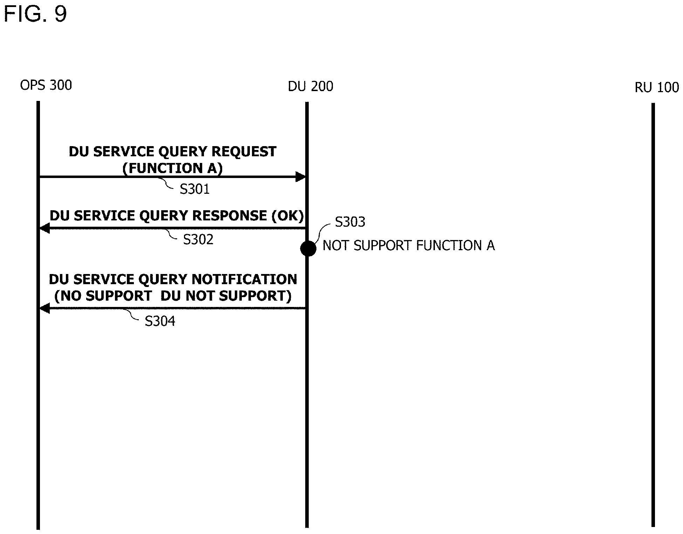

FIG. 9 is a diagram illustrating an example of a sequence of a service query failure caused by the DU 200 not supporting the service, in the service query processing. A service query failure indicates that there is no combination of the DU 200 and the RU 100 supporting the service (DU 200 does not support, or all RUs 100 under the control of the DU 200 do not support).

The OPS 300 transmits a DU service query request to the DU 200 (S301). The DU service query request includes the function A that is a service to be queried.

The DU 200 transmits a DU service query response including acceptance OK to the OPS 300 (S302).

When not supporting the function A, the DU 200 transmits a DU service query notification to the OPS 300 (S304). The DU service query notification includes that the function A is not supported (not support) and its reason (the DU 200 does not support).

Upon receiving the DU service query notification, the OPS 300 stores the name (identifier) of the DU 200 that does not support the function A and the reason.

### <4. Service query failure (RU 100 does not support service)>

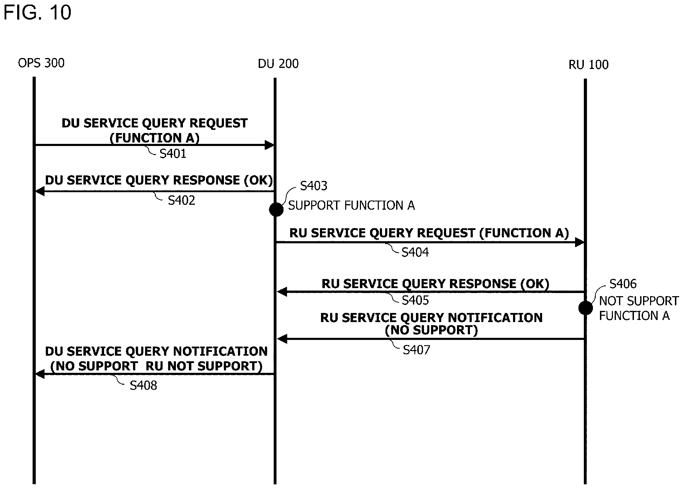

FIG. 10 is a diagram illustrating an example of a sequence of a service query failure caused by the RU 100 not supporting the service, in the service query processing.

The OPS 300 transmits a DU service query request to the DU 200 (S401). The DU service query request includes the function A that is a service to be queried.

When accepting the DU service query request, the DU 200 transmits a DU service query response including acceptance OK to the OPS 300 (S402).

The DU 200 checks whether or not the own device supports the function A (S403). The DU 200 refers to the DU function table 222 and checks whether or not the function A can be supported. When the DU function table has the content illustrated in FIG. 6, the DU 200 recognizes that the function A is supported as a function of the ORAN version number V10.

When the function A is supported, the DU 200 transmits an RU service query request to the RU 200 (S404). The RU service query request includes the function A that is a service to be queried.

When accepting the RU service query request, the RU 100 transmits an RU service query response including acceptance OK to the DU 200 (S405).

The RU 100 checks whether or not the own device supports the function A (S406). The RU 100 refers to the RU function table 122 and checks whether or not the function A can be supported. The RU 100 recognizes from the RU function table 122 that it does not support the function A.

When the function A is not supported, the RU 100 transmits an RU service query notification to the DU 200 (S407). The RU service query notification includes that the query function is not supported (not support).

Upon receiving the RU service query notification from the RU 100, the DU 200 transmits a DU service query notification to the OPS 300 (S408). The DU service query notification includes that the query function is not supported (not support). In addition, the DU service query notification includes that the RU does not support the function A, as a reason for not supporting the function A.

Note that, in the case where the DU 200 has a plurality of RUs 100 under its control, the DU 200 may wait for DU service query notifications from all the RUs 100 under its control. In this case, when all the RUs 100 under its control do not support, the DU 200 transmits a DU service query notification including "not support", to the OPS 300. On the other hand, if at least one RU 100 with support exists, the DU 200 transmits a DU service query notification including "with support", to the OPS 300.

Upon receiving the DU service query notification, the OPS 300 stores the name (identifier) of the DU 200 that does not support the function A and the reason. Note that, in this sequence, since the DU 200 supports the function, the DU 200 may be stored as "with support".

### <Message format>

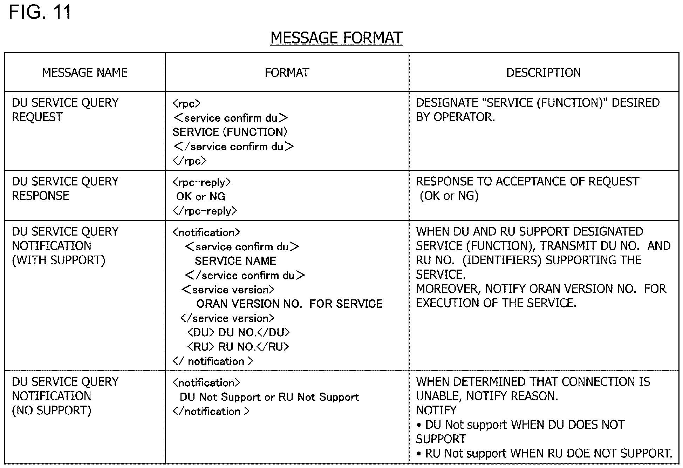

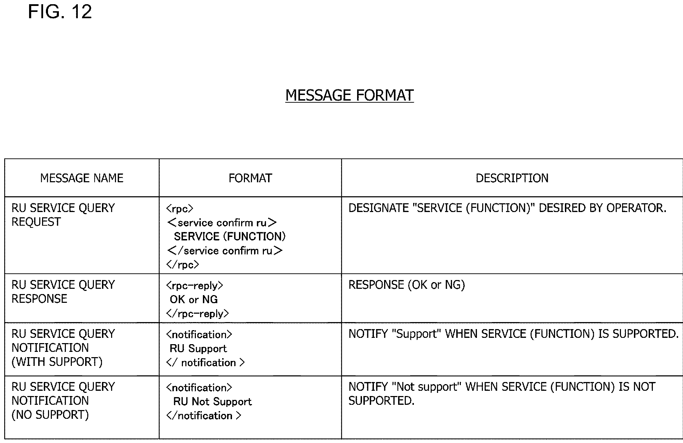

A message format will be described. FIG. 11 is a diagram illustrating an example of a message format between the OPS 300 and the DU 200. FIG. 12 is a diagram illustrating an example of a message format between the DU 200 and the RU 100.

A DU service query request is a message at the start of the service query processing, and includes a service (function). The service is a service desired by the operator, and is, for example, a numerical value (identification number) corresponding to the service.

A DU service query response is a message indicating whether or not the DU service query request is accepted, and includes OK or NG. OK indicates acceptance OK, and NG indicates acceptance NG.

A DU service query notification is a message indicating the service supporting status of the DU 200 or the RU 100. When there is support (when there is a combination of the DU 200 and the RU 100 having the function), the DU service query notification includes the service name (identification number), the ORAN version number for the service, and the names (identifiers) of the DU 200 and the RU 100 supporting the service. The ORAN version number for the service is the ORAN version number for executing the service, and indicates, for example, the ORAN version number in which the service is implemented or defined. In addition, the DU 200 extracts the ORAN version number for the service from the DU function table. In addition, the DU service query notification may include the name (identifier) of the RU 100 that does not support the function.

On the other hand, the DU service query notification includes a reason for no support if there is no support. The reason for no support includes that the DU 200 does not support or that the RU 100 does not support. In addition, the reason for no support may include, for example, absence of the RU 100 to be connected. Moreover, the DU service query notification may include the name (identifier) of the DU 200 or the RU 100 that does not support the function.

An RU service query request is a message for confirming whether or not the RU 100 supports the service, and includes the service (function). The service is a service desired by the operator, and is, for example, a numerical value (identification number) corresponding to the service.

An RU service query response is a message indicating whether or not the RU service query request is accepted, and includes OK or NG. OK indicates acceptance OK, and NG indicates acceptance NG.

An RU service query notification is a message indicating the service supporting status of the RU 100. The RU service query notification includes "with support" when there is support (when the RU 100 supports the function). On the other hand, the RU service query notification includes "not support" when there is no support.

### [Second Embodiment]

A second embodiment will be described. In the second embodiment, the OPS 300 acquires an available ORAN version number. The available ORAN version number indicates an ORAN version number that can use a defined interface, such as communication using a defined structure (YANG module). For example, a device that supports up to the ORAN version number V11 cannot use the interface defined by the ORAN version number V12 because there is a functional difference in the structure (YANG module). Therefore, when a device supporting the ORAN version number V12 communicates with a device supporting the ORAN version number V11 or less, the device side corresponding to the ORAN version number V12 applies backward compatibility (backward compatibility) and performs communication using an interface of the lower ORAN version number V11 (or a version number lower than V11). For example, when the DU 200 is the ORAN version number V11 and the RU 100 is the ORAN version number V12, since the RU 100 applies backward compatibility (backward compatibility), the DU 200 and the RU 100 interface with each other using the ORAN version number V11. On the other hand, when the DU 200 has the ORAN version number V11 and the RU 100 has the ORAN version number V10, the DU 200 is caused to apply backward compatibility (backward compatibility), and the DU 200 and the RU 100 interface with each other using the ORAN version number V10. It is assumed that the ORAN version number that can be used for the interface is determined by the DU 200, is included in the service query notification, and is notified to the OPS 300.

### <Service query processing>

Hereinafter, service query processing in the second embodiment will be described. The case where a service query is successful will be described.

### <1. Service query success>

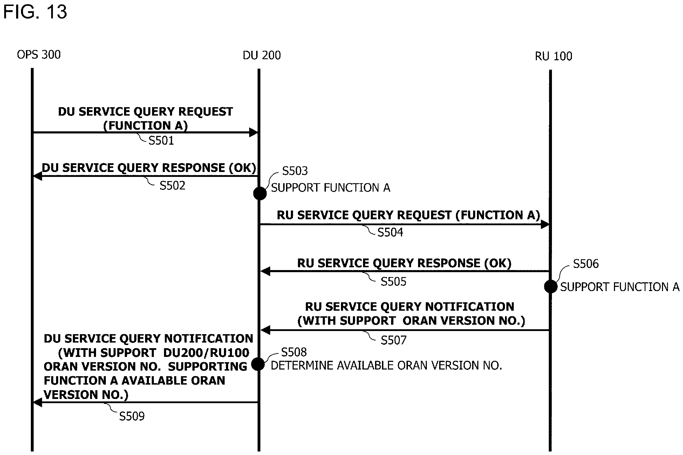

FIG. 13 is a diagram illustrating an example of a sequence of a service query success in the service query processing.

Processing S501 to processing S505 in FIG. 13 are similar to processing S201 to processing S205 in FIG. 8.

The RU 100 checks whether or not the own device supports the function A (S506). The RU 100 refers to the RU function table 122 and checks whether or not the function A can be supported. When the RU function table has the content illustrated in FIG. 7, the RU 100 recognizes that the function A is supported as a function of the ORAN version number V10.

When the function A is supported, the RU 100 transmits an RU service query notification to the DU 200 (S507). The RU service query notification includes that the query function is supported (with support) and the supported ORAN version number by the own device. The supported ORAN version number is the ORAN version number that can be supported by the RU 100, and indicates, for example, the highest ORAN version number of the RU function table. When the RU function table has the content illustrated in FIG. 7, the supported ORAN version number is the ORAN version number V12.

Upon receiving the RU service query notification from the RU 100, the DU 200 transmits a DU service query notification to the OPS 300 (S509). The DU service query notification includes that the query function is supported (with support). In addition, the DU service query notification includes the names (identifiers) of the RU 100 and the DU 200 that support the function A. In addition, the DU service query notification includes the ORAN version number V10 that is the ORAN version number supporting the function A. Further, the DU service query notification includes an available ORAN version number.

As to the available ORAN version number, for example, when the DU 200 is the ORAN version number V11 and the RU 100 is the ORAN version number V12, backward compatibility (backward compatibility) can be applied to the RU 100 side, so that the ORAN version number V11 on the DU 200 side having a lower ORAN version number is selected (S508). In addition, if the DU 200 is the ORAN version number V11 and the RU is the ORAN version number V10, backward compatibility (backward compatibility) can be applied to the DU 200 side, so that the ORAN version number V10 on the RU 100 side having a lower ORAN version number is selected (S508).

Note that when the DU service query notification includes the names (identifiers) of a plurality of RUs 100, for example, the supportable ORAN version number may be included for each RU 100 (for each combination of the RU 100 and the DU 200). Further, when the DU service query notification includes the names (identifiers) of a plurality of RUs 100, for example, the lowest supported ORAN version number may be set as the supportable ORAN version number.

Upon receiving the DU service query notification, the OPS 300 stores the names (identifiers) of the DU 200 and the RU 100 supporting the function A, the ORAN version number supporting the function A, the available ORAN version number, and the like.

As a result, the OPS 300 can recognize not only the combination of the DU 200 and the RU 100 supporting the service but also the ORAN version number available in the combination.

### <Message format>

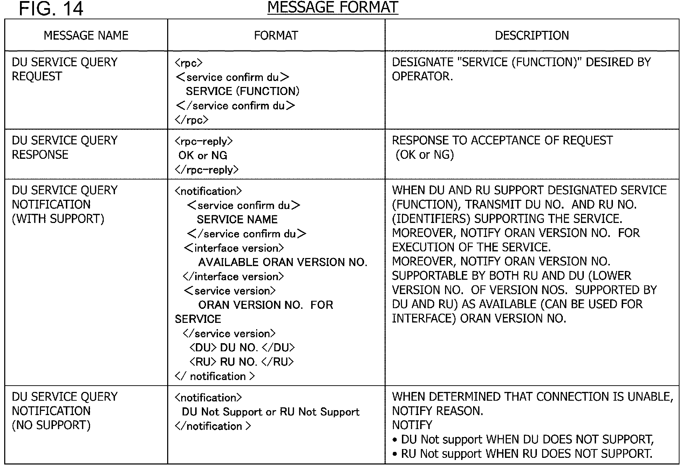

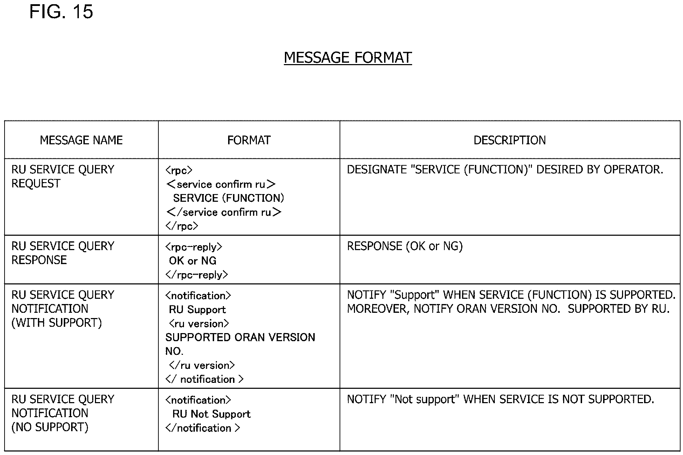

A message format will be described. FIG. 14 is a diagram illustrating an example of a message format between the OPS 300 and the DU 200. FIG. 15 is a diagram illustrating an example of a message format between the DU 200 and the RU 100.

The DU service query request is similar to that in the first embodiment.

The DU service query response is similar to that in the first embodiment.

The DU service query notification includes an available ORAN version number in addition to the DU service query notification in the first embodiment when there is support. The available ORAN version number is an ORAN version number that can be used for the interface. The available ORAN version number is, for example, an ORAN version number that can be supported by both the RU 100 and the DU 200, and the lower of the version numbers of the DU 200 and the RU 100.

Note that when the names (identifiers) of a plurality of RUs 100 are included in the DU service query notification, the available ORAN version number is included in the message for the DU 200 and each RU 100, for example. Further, when the names (identifiers) of a plurality of RUs 100 are included in the DU service query notification, as an available ORAN version number, may be included in the message, an available ORAN version number available to all the RUs 100 and the DU 200 may be included in the message. Further, when the names (identifiers) of a plurality of RUs 100 are included in the DU service query notification, ORAN version numbers supported by the DU 200 and the respective RUs 100 may be included instead of the available ORAN version number. In this case, the available ORAN version number is determined by, for example, the OPS 300.

On the other hand, the DU service query notification is similar to that of the first embodiment when there is no support.

The RU service query request is similar to that in the first embodiment.

The RU service query response is similar to that in the first embodiment.

The RU service query notification includes a supported ORAN version number in addition to the RU service query notification in the first embodiment when there is support. The supported ORAN version number is the ORAN version number (highest ORAN version number) supported by the RU 100.

On the other hand, the RU service query notification is similar to that of the first embodiment when there is no support.

### [Other Embodiments]

The requirements described in the first, second, and other embodiments may be combined. In addition, in the case where presence or absence of support of each service (function) always corresponds to the support of the ORAN version number (if a device supporting an ORAN version number N always supports a function M supported by the ORAN version number N), the service name may be replaced with the ORAN version number. In this case, the ORAN version number for the service (the ORAN version number supporting the function A) may be omitted.

### REFERENCE SIGNS LIST

- 10:: WIRELESS COMMUNICATION SYSTEM
- 100:: RU
- 110:: CPU
- 120:: STORAGE
- 121:: WIRELESS COMMUNICATION PROGRAM
- 122:: RU FUNCTION TABLE
- 123:: RU SERVICE QUERY PROGRAM
- 1231:: RU SERVICE QUERY REQUEST RECEPTION MODULE
- 130:: MEMORY
- 140:: COMMUNICATION CIRCUIT
- 150:: WIRELESS COMMUNICATION CIRCUIT
- 151:: ANTENNA
- 200:: DU
- 210:: CPU
- 220:: STORAGE
- 221:: RU CONTROL PROGRAM
- 222:: DU FUNCTION TABLE
- 223:: DU SERVICE QUERY PROGRAM
- 2231:: DU SERVICE QUERY REQUEST RECEPTION MODULE
- 2232:: RU SERVICE QUERY NOTIFICATION RECEPTION MODULE
- 230:: MEMORY
- 240:: COMMUNICATION CIRCUIT
- 300:: OPS
- 310:: CPU
- 320:: STORAGE
- 321:: COMMUNICATION CONTROL PROGRAM
- 322:: SERVICE QUERY PROGRAM
- 3221:: SERVICE QUERY START MODULE
- 3222:: DU SERVICE QUERY NOTIFICATION RECEPTION MODULE
- 330:: MEMORY
- 400:: NETWORK
- 500:: NETWORK

## Claims

1. A communication device in a wireless communication system constructed based on an open interface specification, the wireless communication system including a control device, a wireless device that accommodates a wireless terminal, and the communication device that processes a signal of the wireless device, each of the communication devices including one or more of the wireless devices under control of the communication device, the communication device comprising:
a communication device receiver that receives a service query including service information related to a type of a service from the control device; and
a communication device transmitter that transmits a wireless device service query including the type of the service to all the wireless devices under the control when the communication device supports the service, wherein
the communication device receiver receives presence or absence of support of the service from the wireless device, and
the communication device transmitter transmits, to the control device, a service query notification including identification information of a supporting wireless device that supports the service among the wireless devices under the control of the communication device.

2. The communication device according to claim 1, wherein
the service query notification further includes service version information in which the service is executable.

3. The communication device according to claim 1, wherein
the communication device receiver receives wireless device version information that is supportable by the supporting wireless device, from the supporting wireless device, and
the service query notification further includes supportable version information that is selected on a basis of backward compatibility (backward compatibility) and is supportable by both the communication device and the supporting wireless device.

4. The communication device according to claim 1, wherein
when the communication device does not support the service, the service query notification includes communication device non-support information indicating that the communication device does not support the service.

5. The communication device according to claim 1, wherein
when the communication device supports the service and when all the wireless devices under the control of the communication device do not support the service, the service query notification includes wireless device non-support information indicating that all the wireless devices under the control of the communication device do not support the service.

6. A wireless device in a wireless communication system constructed based on an open interface specification, the wireless communication system including a control device, the wireless device that accommodates a wireless terminal, and a communication device that processes a signal of the wireless device, each of the communication devices including one or more of the wireless devices under control of the communication device, the wireless device comprising:
a wireless device receiver that receives a wireless device service query including a type of a service transmitted by the communication device having received a service query including service information related to the type of the service transmitted from the control device; and
a wireless device transmitter that transmits presence or absence of support of the service to the communication device, wherein
the communication device transmits, to the control device, a service query notification including identification information of a supporting wireless device that supports the service, in response to reception of presence or absence of the support of the service from the wireless device.

7. A control device in a wireless communication system constructed based on an open interface specification, the wireless communication system including the control device, a wireless device that accommodates a wireless terminal, and a communication device that processes a signal of the wireless device, each of the communication devices including one or more of the wireless devices under control of the communication device, the control device comprising:
a transmitter that transmits a service query including service information related to a type of a service to the communication device; and
a receiver that receives a service query notification including support information of the service from the communication device, wherein
when the communication device supports the service, the support information includes identification information of a supporting wireless device that is the wireless device supporting the service and is under the control of the communication device.

8. The control device according to claim 7, wherein
when the communication device supports the service, the support information further includes service version information in which the service is executable.

9. The control device according to claim 7, wherein
when the communication device supports the service, the support information further includes supportable version information that is selected on a basis of backward compatibility (backward compatibility) and is supportable by both the communication device and the supporting wireless device.

10. The control device according to claim 7, wherein
when the communication device does not support the service, the support information includes communication device non-support information indicating that the communication device does not support the service.

11. The control device according to claim 7, wherein
when the communication device supports the service and when all the wireless devices under the control of the communication device do not support the service, the support information includes wireless device non-support information indicating that all the wireless devices under the control of the communication device do not support the service.

12. A control device in a wireless communication system constructed based on an open interface specification including the control device, a wireless device that accommodates a wireless terminal, and a communication device that processes a signal of the wireless device, each of the communication devices including one or more of the wireless devices under control of the communication device, the control device comprising:
a transmitter that transmits a service query including service information related to a type of a service to the communication device; and
a receiver that receives a service query notification including support information of the service from the communication device, wherein
when the communication device supports the service, the support information includes identification information of a supporting wireless device that is the wireless device supporting the service and is under the control of the communication device, and
the communication device performs a query on all the wireless devices under the control about presence or absence of support of the service, and determines the supporting wireless device from a result of the query.

13. A wireless communication system constructed based on an open interface specification, the wireless communication system comprising: a control device; a wireless device that accommodates a wireless terminal; and a communication device that processes a signal of the wireless device, each of the communication devices including one or more of the wireless devices under control of the communication device, wherein
the control device transmits a service query including service information related to a type of a service,
the communication device transmits a wireless device service query including the service information related to the type of the service to all the wireless devices under the control of the communication device when the communication device supports the service,
each of the wireless devices under the control transmits presence or absence of support of the service to the communication device, and
the communication device transmits, to the control device, a service query notification including an identifier of a supporting wireless device that supports the service.

14. A control method in a control device of a wireless communication system constructed based on an open interface specification, the wireless communication system including the control device, a wireless device that accommodates a wireless terminal, and a communication device that processes a signal of the wireless device, each of the communication devices including one or more of the wireless devices under control of the communication device, the method comprising:
transmitting a service query including service information related to a type of a service to the communication device; and
receiving a service query notification including support information of the service from the communication device, wherein
when the communication device supports the service, the support information includes identification information of a supporting wireless device that is one of the wireless devices that supports the service and is under the control of the communication device.

15. A control method in a wireless communication system constructed based on an open interface specification, the wireless communication system including a control device, a wireless device that accommodates a wireless terminal, and a communication device that processes a signal of the wireless device, each of the communication devices including one or more of the wireless devices under control of the communication device, the method comprising:
by the control device, transmitting a service query including service information related to a type of a service to the communication device;
by the communication device, transmitting a wireless device service query including the type of the service to all the wireless devices under the control when the communication device supports the service;
by each of the wireless devices under the control, transmitting presence or absence of support of the service to the communication device; and
by the communication device, transmitting a service query notification including an identifier of a supporting wireless device that supports the service to the control device.
